# EUROPEAN PATENT SPECIFICATION

(11) **EP 2 928 692 B1**
(45) Date of publication and mention of the grant of the patent: **09.11.2016**
(21) Application number: 13820874.9
(22) Date of filing: 04.12.2013
(51) Int. Cl.: B32B 37/00, B42C 7/00

(54) **LAMINATING DEVICE AND USE OF THIS LAMINATING DEVICE**
LAMINIERVORRICHTUNG UND VERWENDUNG DIESER LAMINIERVORRICHTUNG
DISPOSITIF DE STRATIFICATION ET UTILISATION DE CE DISPOSITIF DE STRATIFICATION

(30) Priority: 05.12.2012 BE 201200821
(43) Date of publication of application: 14.10.2015
(73) Proprietor: Unibind Limited, 136 Nicosia (CY)
(72) Inventor: PELEMAN, Guido, B-2018 Antwerpen (BE)
(74) Representative: Donné, Eddy
(86) International application number: PCT/IB2013/002693
(87) International publication number: WO 2014/087220

(56) References cited:
- WO-A2-2010/084399
- WO-A2-2012/140491
- US-A- 3 047 051
- US-A- 4 097 326
- US-A- 4 172 750
- US-A- 4 818 168
- US-A- 5 073 076
- US-A- 5 746 878

## Description

The present invention relates to a laminating device.

Lamination is a known joining technique for joining a number of layers of the same and/or different materials together.

Nowadays different methods are used for laminating.

A first method is known as wet lamination whereby a liquid adhesive is applied between the layers to be joined, which after drying provides a mutual bond between the laminated parts.

A second known method is that of dry lamination whereby a self-adhesive glue is applied between the layers to be joined, which after pressing the layers brings about the bond between the layers.

A third known method is thermal lamination, whereby one or both contact surfaces of the layers to be laminated are provided with a hot-melt adhesive and whereby by heating and/or by applying pressure the contact surfaces become plastic and melt together so to speak.

The invention relates in particular to a laminating device for the application of this last method, i.e. a laminating device for applying a film onto a substrate whereby the film and/or the substrate are provided with a coat of hot-melt adhesive.

In order to apply this method it is necessary to first warm up the hot-melt adhesive in order to make it melt and then to exert pressure to press the molten hot-melt adhesive over the entire contact surface to ensure even bonding over the entire surface.

There are small laminating devices that are available on the market for home use or in small offices that enable two thin flexible films with a thickness of less than two tenths of a millimetre, for example, to be laminated together.

To this end there are solutions such as roller laminators with 2, 4, 6 or 8 rollers, with or without a "hot shoe", that work with pre-cut pieces of material of the laminate film, that are pulled together between heated rollers or between a roller and the hot shoe. There are also laminators that work in the same way, but with a laminate film roll.

However, this type of small laminating device has the disadvantage that it is not possible to obtain a robust and even lamination when a thin film of a thickness of two tenths of a millimetre, for example, must be laminated on a thicker substrate of cardboard, hard plastic or similar of half a millimetre for example.

This lies in the fact, among others, that the rollers are mounted at a fixed distance from one another and the pressure thus varies according to the thickness of the materials to be laminated that are pulled between the rollers. With more expensive devices the distance between the rollers is adjustable.

Another cause probably lies in the fact that the heating cannot be done evenly over the entire length of the transit of the layers to be laminated between the rollers, whereby due to the greater mass of the thicker substrate the heat of the rollers is more strongly absorbed in the thicker substrate, such that the temperature of the rollers and/or the hot shoe decreases sharply and the hot-melt adhesive does not melt sufficiently, if at all. This can result in weak bonding or even to the absence of bonding at the end of the movement between the rollers.

This phenomenon is caused, for example, by the difference between the transit speed of the layers to be laminated and the speed of detection of the temperature decrease by the thermostat on the outside of the laminating roller or hot shoe. This speed difference causes a delayed detection of the temperature decrease, which ensures that the materials to be laminated have already gone through the laminating device before the laminating roller begins to heat up again to a sufficiently high temperature for correct bonding.

Some known examples of roller laminating devices are shown in US 5073076, US 4097326 and US 4172750.

An example of a product to be laminated is the binding element shown in WO2010/084399.
Devices for generally applying heat to surfaces to be treated, without specifically being laminating devices, are also known, for instance from WO2012/140491.
The purpose of the present invention is to provide a solution to the aforementioned and other disadvantages by providing a laminating device for affixing a film on a substrate whereby the film and/or the substrate are provided with a coat of hot-melt adhesive, whereby the laminating device is provided with:
- a base and a plate that is movable vertically with respect to the base and which together with the base forms a space in which the substrate, together with the film to be laminated affixed against it, can be introduced;
- means to lift the plate upwards and lower it again to a rest position in which the plate can rest on a substrate with a film to be laminated that is in the space between the plate and the base;
- a heating element for heating the plate and/or the base to a temperature that is above the melting temperature of the hot-melt adhesive; and
- an input and output for the entry and exit of the substrate together with the film to be laminated to and from the space between the base and the plate.

In order to laminate, the plate is first lifted upwards and the substrate with the film to be laminated are introduced together under the plate and then the plate is allowed to descend to let it rest on the substrate with the film. The operator of the device can apply some extra force here to bring the plate and the film into better contact with one another, so it can work with a very short contact time, such that the end product is ready quickly and the substrate and the film only have limited exposure to possible thermal damage.

Due to the good contact of the film with the heated base or plate, the hot-melt adhesive melts. Due to the relatively high mass of the plates and the even heating of the film over its entire surface the hot-melt adhesive melts evenly everywhere and the temperature does not fall below a minimum melting temperature.

After a few seconds when the hot-melt adhesive is sufficiently molten, the plate is raised again and the substrate with the film with molten adhesive is pulled out of the laminating device via the output so that the adhesive can solidify.

An advantage of such a laminating device according to the invention is that it enables a thin film to be laminated on a thicker substrate with a quality finish that rivals that of the more expensive professional industrial laminating devices.

In particular due to the pressure exerted on the film and the substrate during the melting stage, the film is affixed nicely flat on the substrate.

It is even possible to provide rigid book covers of cardboard or similar with a laminated film, printed or otherwise, using a laminating device according to the invention.

Another advantage of a laminating device according to the invention is that it can be realised in a very simple way and as a result is extremely suitable to be used as a small device for home use or at the office, either sporadically or in a small series, without big investments.

Preferably the means for raising the plate and lowering it are constructed as a lever mechanism that enables the plate to be moved manually up and down.

In a preferred embodiment the device is provided with a U-shaped slot formed by a base element and two wall elements, whereby the base element and/or the wall elements are heatable.

Preferably the base element here is formed by the plate, whereby the laminating device is provided with a heating element for heating the plate, whereby preferably the wall elements are heatable by being made of a material that is a good thermal conductor, such as aluminium, and by being in thermal contact with the plate.

This has the advantage that a binding cover with a covered back can easily be made with this laminating device. To this end a substrate that is formed as such a cover and an outer covering for its back are taken, whereby at least one of the two has a coat of hot-melt adhesive at the position of the back, and are then positioned together as desired, and the back of the substrate together with the outer covering positioned thereon is placed in the slot until the adhesive has melted.

Then both are removed after which the outer covering is only stuck to the substrate on the back.

The rest of the outer covering can then be affixed to the substrate on the parts that will later form the cover leaves of the binding cover in a way as described above for a flat substrate.

In a preferred embodiment of this at least one of the wall elements can be moved in a direction away from the other wall element and back in order to change the width of the slot, and preferably is provided with a compression spring to push a movable wall element in the direction of the other wall element.

As a result sufficient pressure, and thus a good thermal contact, is also assured when laminating the back.

In a preferred embodiment the laminating device is provided with a pressure roller mounted at the output that can be moved vertically with respect to the base, and pressure means that push the pressure roller in the direction of the base, and which press the film and the substrate against one another during the exit of the substrate with the film to be laminated.

When removing the substrate from the device the substrate is hereby pulled under the pressure roller in order to press the film against the substrate and to allow it to solidify due to the temperature difference with the colder pressure roller.

This has a supplementary positive effect on the smooth affixing of the film to the laminate.

Because the height of the pressure roller can adjust to the thickness of the introduced materials within certain limits, the pressure of the pressure roller will vary little and thus will have little effect on the quality of the work when laminating substrates and films of different thicknesses.

In a preferred embodiment the pressure roller can move vertically independently of the plate. In other words, the plate can be moved while the pressure roller stays in place or the pressure roller is in a position to be able to work while the plate is raised.

The invention also relates to the use of a laminating device according to the invention, as described above, for laminating a film on a substrate with a greater thickness than the thickness of the film, for example for laminating a film on a rigid substrate such as cardboard, hard plastic or similar, whose thickness is greater than half a millimetre and a film that is thinner than two tenths of a millimetre.

Up until now this has not been possible without an expensive investment in an industrial laminator.

Furthermore, the invention concerns the use of a laminating device as described above for manufacturing a binding cover for binding a bundle of leaves by attaching an outer covering on an element for manufacturing such a binding cover whereby, in places where an attachment of the outer covering to the element is desired, the outside of the element and/or the outer covering is provided with a coat of hot-melt adhesive.

With the intention of better showing the characteristics of the invention, a preferred embodiment of a laminating device according to the invention is described hereinafter by way of an example, without any limiting nature, with reference to the accompanying drawings, wherein:
Figure 1 schematically shows a perspective view of a laminating device according to the invention;
figure 2 shows the inside of the device of figure 1, viewed from a different angle;
figure 3 shows a cross-section according to line III-III of figure 1, but in a different position of the device;
figure 4 shows the device of figure 2, but with a side plate removed;
figure 5 shows a side view according to arrow F5 in figure 4;
figures 6 to 10 illustrate the use of a laminating device according to the invention during successive steps of the use.
Figure 11 shows an alternative embodiment of the laminating device according to the invention, according to a view as in figure 1;
Figure 12 shows a side view according to F12 of the part of the laminating device of figure 11 during use, and with a component removed; and
Figure 13 shows the part of figure 12 indicated by F13 on a larger scale.

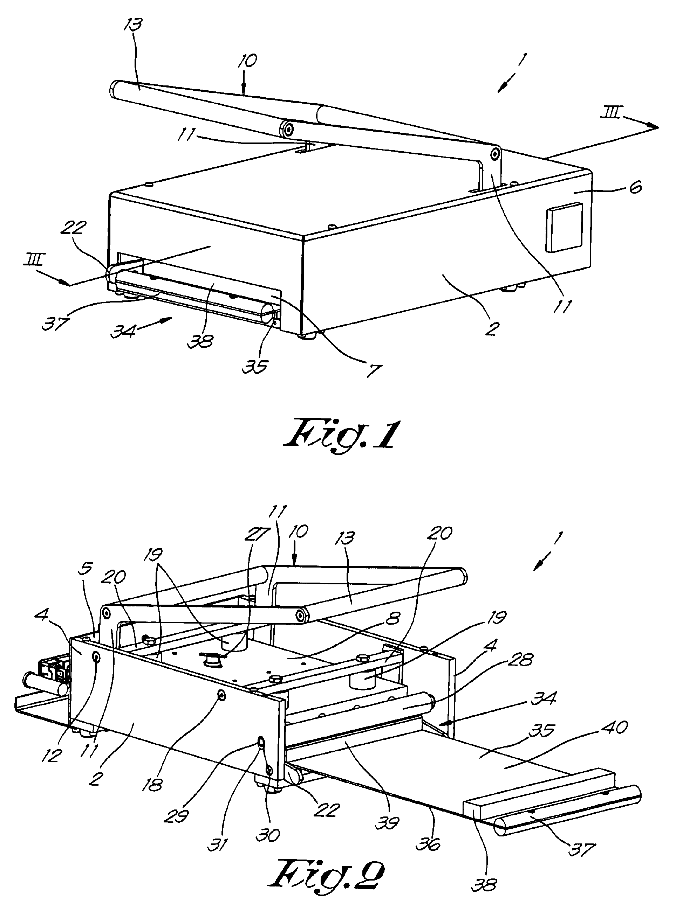

The laminating device 1 shown in figure 1 comprises a housing 2 consisting of a base 3 with two opposite upright side walls 4 connected by a back wall 5 and of a cap 6 that is provided with an opening 7 through which the materials to be laminated can be put in and taken out.

In the housing 2 at a distance above the base there is a plate 8 of a thermally conductive material, for example aluminium, and this plate has a certain thickness of one to a few centimetres and can move vertically to provide space 9 for the introduction of a substrate with a film to be laminated.

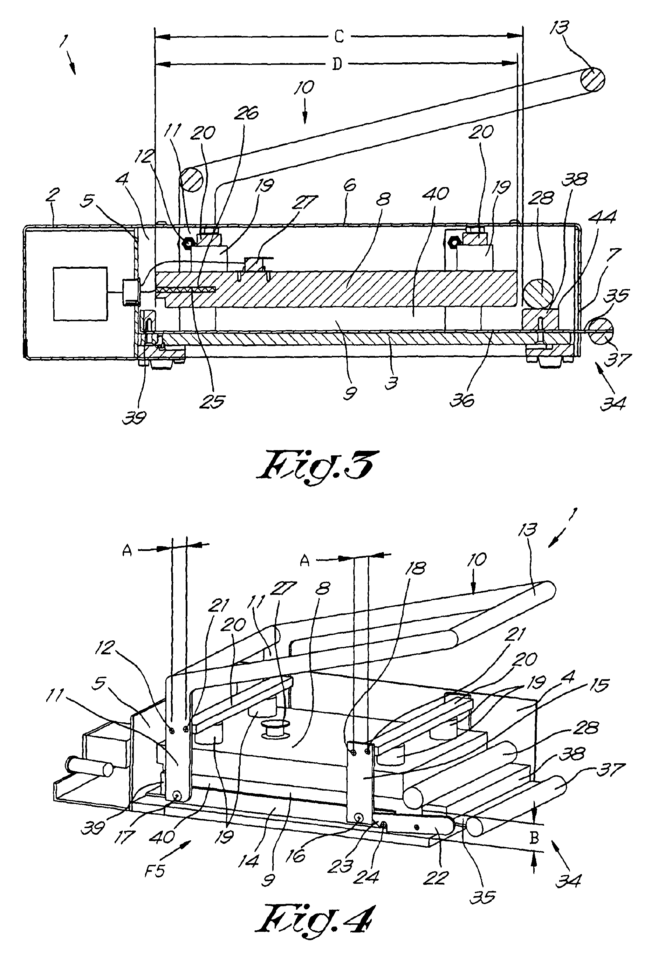

In this case the plate 8 can be adjusted vertically by means of a lever mechanism 10 that comprises a lever 11 on either side of the plate 8, whereby each lever 11 is hingeably mounted on bearings by means of a shaft 12 in an opposite side wall 4 and whereby the lever 11, as shown in figure 1, partly protrudes out of the housing and, as shown in figure 4, a section is inserted in the housing.

The levers 11 are connected together by means of a handle 13 with which the levers 11 can be turned around their shaft 12.

The free end of the section of each lever that is inserted in the housing is connected to a bar system of two bars 14-15 that are coupled together by means of a hinge 16, whereby one bar 14 is coupled by a hinge 17 to the lever and the other bar 15 is suspended from a side wall 4 by a hinge 18, and whereby the hinge points 12-16-17-18 are positioned at the vertexes of an imaginary parallelogram.

The plate 8 is suspended by means of insulation blocks 19 from two slats 20, which in turn are suspended from the lever mechanism 10, more specifically one slat 20 between the levers 11 and the other slat 10 between the bars 15, by means of pivot points 21 that are located at a distance A from the shafts 12 and 18 respectively of the levers 11 and the bars 15.

The lever mechanism 10 is designed such that with an upward or downward movement of the handle 13, the plate 8 is raised or the plate 8 descends, always parallel to the base 3 and to itself. It is clear that alternative mechanisms are conceivable for raising and lowering the plate 8.

A bolt 22 enables the lever mechanism 10 to be locked in a raised position of the plate, and this bolt 22 in this case is formed by a lever that partly protrudes out of the housing 2 and which is provided with a hook 23 that grips over a peg 24, which is provided on the lever mechanism 10 to this end, more specifically on the bar 14.

Heating elements 25 are provided in the plate 8 for heating the plate 8 and keeping it up to temperature.

These heating elements 25 are resistors for example, that are mounted in boreholes 26 in the plate 8 or which are cast in the material of the plate 8.

The temperature of the plate 8 is kept at a sufficiently high level above the melting temperature of the hot-melt adhesive on the materials to be laminated, for example at a temperature of 100°C, by means of a thermostat 27 or similar.

A pressure roller 28 is provided on the side of the opening 7 in the housing 2 at a short distance from the plate 8 and parallel to an edge of the plate 8.

The pressure roller 28 is provided with a shaft 29 that is held movably by its ends in vertical slip holes 30 whose lowest edge forms an end stop 31.

These ends are pushed downwards by pressure means, for example in the form of springs 32 that are affixed in vertical boreholes 33 in the side walls 4.

The pressure roller 28 is made of silicone rubber or is provided with a covering of this material.

In its simplest form the pressure roller 28 is not provided with active cooling or heating.

When the pressure roller 28 rests with the ends of its shaft 29 on the aforementioned end stops 31 of the slip holes 30, then the pressure roller 28 is at a distance B from the base 3, whereby the gap between the pressure roller 28 and the base 2 in this case acts as an input and output 34 for a substrate with film or for a slide 35 that acts as a carrier for moving the substrate with the film in and out of the laminating device 1.

In the embodiment described here, such a slide 35 is shown in the drawings, and in this case this slide 35 consists of a plate 36 with a handle 37 and two upright ribs 38 and 39 at a distance C from one another that demarcate a spatial zone in which the substrate with the film can be introduced, for example a substrate of A4 format.

The distance C between the ribs 38 and 39 is preferably equal to or somewhat greater than the length D of the plate 8 measured in the entry direction of the plate 8.

Preferably an end stop is provided for the slide 8 in the entry direction, and in this case this end stop is formed by the back wall 5 and which is such that, at the end stop, the plate 8 is directly above the space 40 between the ribs 38 and 39, and the rib 38 on the side of the handle 37 is directly below the pressure roller 28, as illustrated in figure 3.

The thickness of the rib 38 on the side of the handle 37 is preferably chosen such that when the rib 38 is under the pressure roller 28, the pressure roller 28 is pushed slightly upwards against the force of the springs 32, which are thereby pre-stressed, and this pre-stress ensures that the pressure roller is pressed against the rib 38 with a known force.

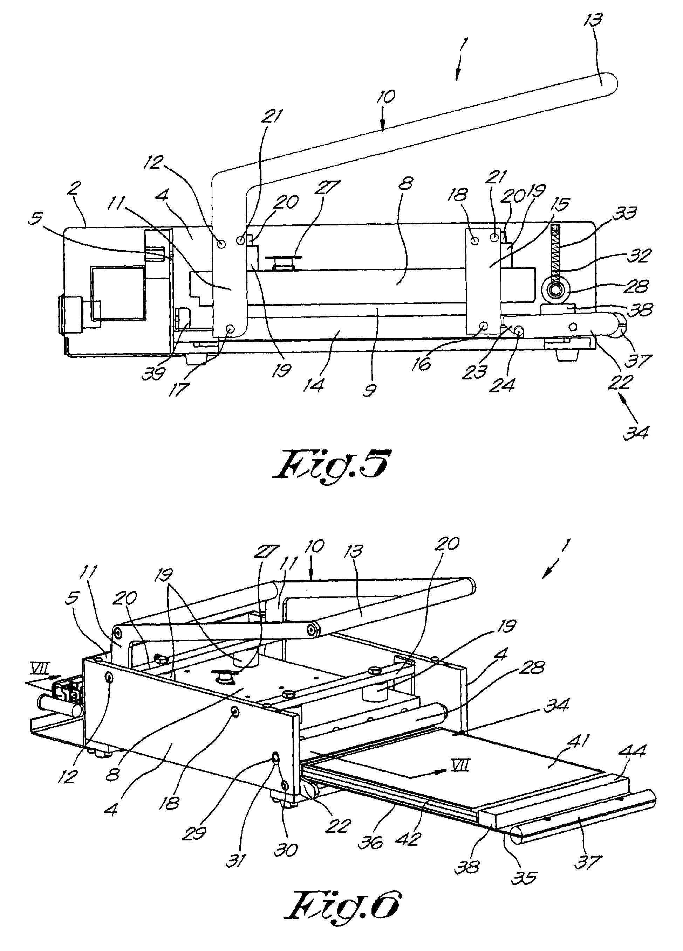

The use of the laminating device 1 according to the invention is very simple and explained on the basis of figures 6 to 9 for laminating a film 41 provided with a coat of hot-melt adhesive on the substrate 42, which, by way of an example, is illustrated as a file or cover of a book of thick rigid cardboard.

It starts from a situation, as shown in figure 4, in which the handle 13 of the lever mechanism 10 is locked in its highest position by the bolt 22 and the slide 35 is slid in the device 1.

To laminate, the laminating device 1 is first switched on for a while to heat up the plate 8 to a temperature that is set in the thermostat 27 and which is higher than the melting temperature of the hot-melt adhesive.

After sufficient heating the slide 35 is pulled out of the laminating device 1 as shown in figure 2 and, as shown in figure 6, the substrate 42 with the film 41 thereon is laid in the space 40 between the ribs 38 and 39 of the slide 35, with the film 41 turned upwards and the hot-melt adhesive in contact with the top of the substrate 42.

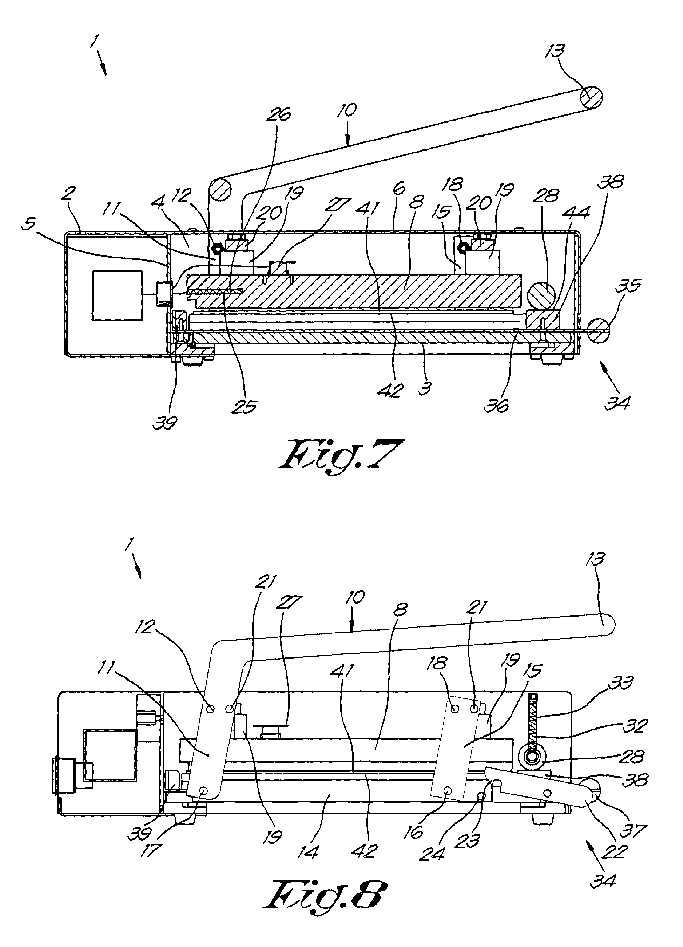

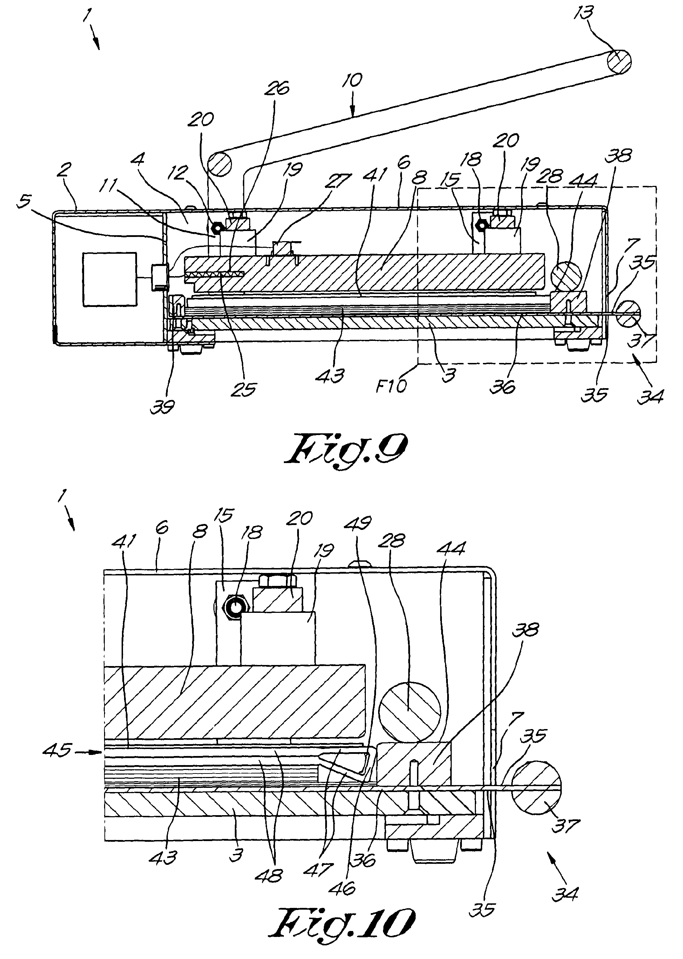

When introducing the substrate 42 in the slide it is preferably ensured that the top of the film 41 on the substrate comes to the same height as the top 44 of the rib 38, for example by using a substrate 42 with a suitable thickness, as is the case in figures 6 and 7, or in the case of a thinner substrate, as in figure 9, by using thickness plates 43 or other means to accommodate the difference in thickness between the substrate 42 with the film 41 on the one hand, and the rib 38 on the other.

Then, as shown in figure 7, the slide 35 is slid back in the laminating device 1 up to against the back wall 5, such that the substrate 42 with the film 41 comes under the heated plate 8 and the pressure roller 28 comes to rest on the rib 38.

Afterwards the bolt 22 is unlatched, such that the user can let the heated plate 8 descend until it rests on the substrate with the film as shown in figure 8, so that a good thermal contact is obtained between the plate and the substrate.

As a result of the heat of the plate 8 the hot-melt adhesive melts.

After around ten seconds the handle 13 is lifted back up and is again locked in its highest position by means of the bolt 22 such that the plate 8 is taken away from the substrate 42 with the film 41, after which the slide 35 with the substrate 42 and the film 41 is pulled from the laminating device 1, such that the film 41 is pressed against the substrate 42 over its entire width and length by the downward pressure exerted by the springs 32 via the pressure roller 28.

Due to the contact with the relatively colder pressure roller 28 the hot-melt adhesive solidifies almost immediately.

Because the film 41 is at the same height or is brought to the same height as the top 44 of the rib 38, upon removing the slide 35, the pressure roller 28 rolls as it were without interruption, smoothly from the rib 38 onto the substrate 42 with the film 41, whereby the height of the pressure roller 28 remains constant and as a result the pressure roller also presses the film against the substrate with a known reproducible constant pressure.

Figure 10 shows that rigid covers 45, or elements for manufacturing a binding cover, can be laminated with the laminating device, whereby in this case the rigid cover 45 is formed by a U-shaped binding back 46 with two arms 47 of metal with two endpapers 48 of cardboard, plastic or similar attached to it, provided with a coat of hot-melt adhesive 49 or otherwise on the inside of the back 46 that can act in a known way as a binding adhesive for binding a bundle of leaves by heating the back in a binding device suitable for this purpose.

In this case, the cover 45 is placed in the slide 35 with the necessary number of thickness plates 43 in order to make the top of the whole flat, and this at the same height as the top 44 of the rib 38. These thickness plates 43 can be introduced under the cover 45, as shown, but alternatively also between the endpapers 48.

The laminated film 41, also called an outer covering, in this case runs up to the back 46.

The entire operation can of course be repeated to also provide the other endpaper 48 of the cover 45 with a laminated film 41, that continues over the back or otherwise.

The missing piece on the back 46 that is not provided with a laminate in this way can, if need be, also be covered with a laminate strip when heating the back 46 to bind a bundle of leaves in the binding back 46. In this way the cover 45 can be completely covered around the outside from the front side over the back to the reverse side.

Generally a substrate with a laminate film thereon will often be used.

In addition two or more variants are also possible, i.e.:
- a first variant in the form of a substrate with a sheet of paper coated with hot-melt adhesive bonded thereon with the coating on the top, so that an ordinary paper, printed or otherwise, can be bonded thereon with this laminating device, and,
- a second variant with a substrate with a coated sheet of paper thereon, with the coating on the top and a laminate on top of that, so that an ordinary paper, printed or otherwise, can be bonded onto it with this laminating device, also with the protection of the laminated laminate.

It is clear that the laminating device 1 according to the invention is of a very simple construction, for example by only a heated plate 8 being required, without it being necessary to actively heat or cool other components such as rollers or similar.

According to an alternative embodiment, instead of heating the plate 8, the base 3 or the slide 35 can be heated, whereby in this case the film 41 to be laminated is placed under the substrate 42.

It is not excluded either that the input and output 34 for the entry and exit of the substrate 42 or the slide 35 with the substrate 42 are different and the output of the device is at the back, for example.

It is also clear that the use of the laminating device 1 according to the invention is not exclusively limited to laminating materials of different thicknesses but can also be used for laminating thin films of approximately the same thickness.

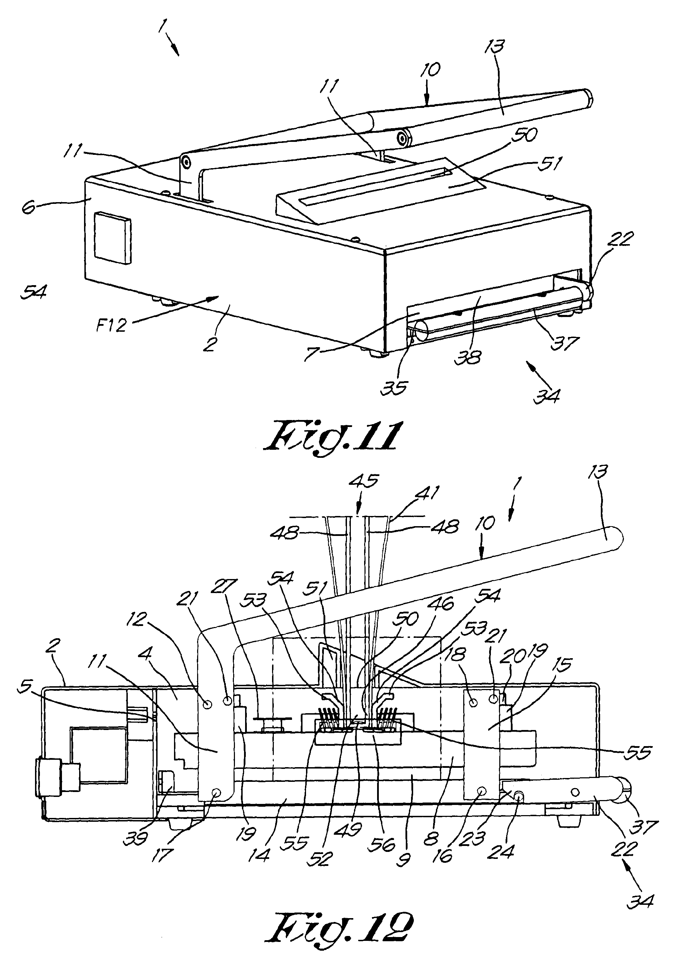

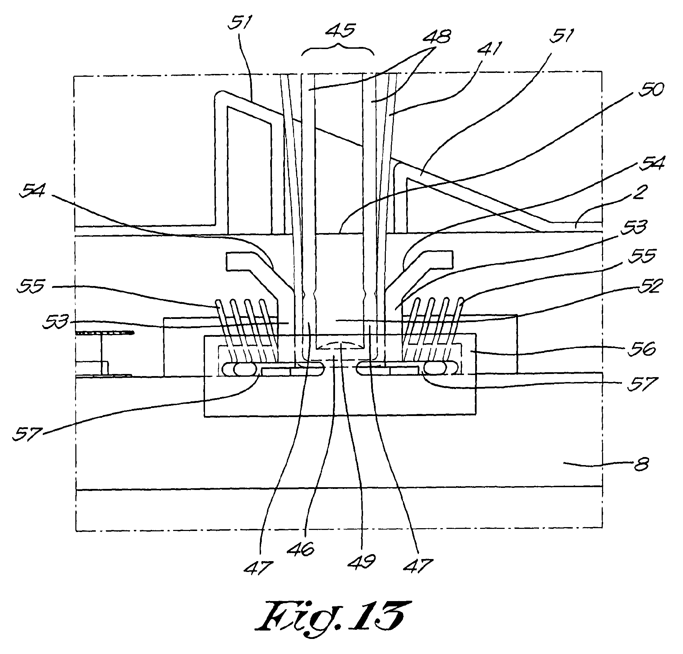

An alternative embodiment of the laminating device 1 is shown in figures 11 to 13. It is noted here that the side 4 wall is not shown in figures 12 and 13 for clarity.

This laminating device 1 differs from the laminating device described above in that it is not provided with a pressure roller 28 and the components 29-33 associated with it.

Furthermore this laminating device 1 differs in that the cap 6 is provided with an elongated passage 50 that extends over practically the entire width of the laminating device 1. A triangular structure 51 is provided around the passage.

A U-shaped slot 52 is provided below the passage 50. The bottom of this slot 52 is formed by the plate 8 and the walls of the slot 52 are formed by wall elements 53 with a chamfer 54.

These wall elements 53 are fastened to the plate 8 in a horizontally movable way by means of compression springs 55. To this end they are suspended from two supports 56 with horizontally extending slotted holes 57. The wall elements 53 are made of aluminium and are in contact with the plate 8 on their underside so that heat can easily be transferred between the plate 8 and the wall elements 53.

The use of this alternative embodiment differs from the method of figure 10 as follows.

The heating elements 25 of the plate 8 are switched on, such that the plate has the necessary temperature. Due to conduction the wall elements 53 come to practically the same temperature.

A similar rigid cover 45 as described above is used together with a film 41 that is sufficiently large to cover both endpapers 48 and the back 46 without interruption, whereby the film 41 is provided with a coat of hot-melt adhesive.

The film 41 is placed on the cover 45 with the correct orientation and with the hot-melt adhesive turned towards it.

Then the back 46 of the cover 45, with the film 41 thereon, is inserted through the passage 50 and inserted in the U-shaped slot 52. Hereby the wall elements 53, thanks to their chamfer 54, are pushed apart against the elasticity of the springs 55 and exert a force on the arms 47 of the back 46 enveloped by the film 41.

Thanks to the heat of the plate 8 and the wall elements 53 the hot-melt adhesive now melts on the film 41. Then the cover 45 and the film 41 are again pulled out of the slot 52, after which the hot-melt adhesive solidifies and the film 41 is attached to the back 46 of the cover 45.

The further course of the lamination method to attach the film 41 to the endpapers 48 is practically the same as the method described above, shown in figure 10.

Hereby the operator of the laminating device 1 is attentive to pressing the plate 8 down with sufficient force by means of the lever 11, so that as a result of the pressure of the plate 8 the film 41 is affixed flat on the cover 45.

The laminating devices described can optionally be provided with a flexible sheet of non-stick material, for example a Teflon sheet, that can be affixed between the substrate and the plate to prevent any released quantities of adhesive getting onto the plate and being burned onto it. Instead of this they land on the said sheet from where they can easily be removed on account of the non-stick nature of the sheet.

The present invention is by no means limited to the embodiment described as an example and shown in the drawings, but a laminating device according to the invention can be realised in all kinds of forms and dimensions, without departing from the scope of the invention.

## Claims

1. Laminating device for affixing a film (41) on a substrate (42) whereby the film (41) and/or the substrate (42) are provided with a coat of hot-melt adhesive, whereby the laminating device (1) is provided with:
• a base (3) and a plate (8) that is movable vertically with respect to the base (2) and which together with the base (2) forms a space (9) in which the substrate (42), together with the film (41) to be laminated affixed against it, can be introduced;
• means to lift the plate (8) upwards and lower it again to a rest position in which the plate (8) can rest on a substrate (42) with a film (41) to be laminated that is in the space between the plate (8) and the base (3);
• a heating element (25) for heating the plate (8) and/or the base (3) to a temperature that is above the melting temperature of the hot-melt adhesive; and
• an input and output (34) for the entry and exit of the substrate (42) together with the film (41) to be laminated to and from the space (9) between the base (3) and the plate (8),
**characterised in that** it is provided with a U-shaped slot (52), formed by a base element (8) and two wall elements (53), whereby the base element (8) and/or the wall elements (53) are arranged to be heated.

2. Laminating device according to claim 1, **characterised in that** the base element is formed by the plate (8), whereby the laminating device (1) is equipped with a heating element (25) for heating the plate (8)

3. Laminating device according to claim 2, **characterised in that** the wall elements (53) are arranged to be heated by being made of a material that is a good thermal conductor, such as aluminium, and by being in thermal contact with the plate (8).

4. Laminating device according to any one of the claims 1 to 3, **characterised in that** at least one of the wall elements (53) can be moved in a direction away from the other wall element (53) and back to thereby change the width of the slot (52).

5. Laminating device according to claim 4, **characterised in that** it is provided with a compression spring (55) in order to push a movable wall element (53) in the direction of the other wall element (53).

6. Laminating device according to any one of the previous claims, **characterised in that** the plate (8) is large enough to completely cover the substrate (42).

7. Laminating device according to any one of the previous claims, **characterised in that** it is provided with a pressure roller (28) mounted at the output (34) that can be moved vertically with respect to the base (3), and pressure means (32) that push the pressure roller (28) in the direction of the base (3) and which, during the exit of the substrate (42) with the film (41) to be laminated press the film (41) and the substrate (42) against one another.

8. Laminating device according to claim 7, **characterised in that** the pressure roller (28) can move vertically independently of the plate (8).

9. Laminating device according to claim 7 or 8, **characterised in that** it is provided with means that enable the height of the top surface of the substrate (42) with the film (41) to be laminated to be adjusted or set at a desired level of the underside of the pressure roller (28).

10. Laminating device according to any one of the previous claims, **characterised in that** it is provided with a slide (35) for the entry and exit of the substrate (42) and the film (41) to be laminated.

11. Laminating device according to claim 10, **characterised in that** the slide (35) is provided with at least two upright ribs (38-39) at a distance (C) from one another that demarcate a space (40) in which the substrate (42) with the film (41) can be introduced, whereby the aforementioned distance (C) is equal to or somewhat greater than the length (D) of the plate (8) measured in the entry direction of the plate (8).

12. Laminating device according to claim 9 and claim 11, **characterised in that** the means that enable the height of the top surface of the substrate (42) with the film (41) to be laminated to be adjusted and set at a desired level with respect to the level of the underside of the pressure roller (28) are formed by a set of thickness plates (43) that pass between the ribs (38-39) of the slide (35).

13. Laminating device according to claim 11 or 12, **characterised in that** the height of at least one of the ribs (38-39) of the slide is a gauge for the height adjustment of the top surface of the substrate (42) with the film (41) to be laminated.

14. Laminating device according to claim 13 and any one of the claims 7 to 9, **characterised in that** the height of the aforementioned rib (38-39) is such that when the rib (38-39) concerned comes under the pressure roller (28) when sliding the slide (35), this pressure roller (28) is pushed upwards.

15. Laminating device according to any one of the previous claims, **characterised in that** it is provided with a housing (2) with the said base (3).

16. Laminating device according to any one of the previous claims, **characterised in that** the plate (8) is manufactured from a thermally conductive material and is provided with one or more heating elements (25).

17. Laminating device according to any one of the previous claims, **characterised in that** the base (3) is not heated.

18. Laminating device according to any one of the previous claims, **characterised in that** the input and output (34) are together formed by the gap between the base (3) and the pressure roller (28).

19. Use of a laminating device (1) according to any one of the previous claims for manufacturing a binding cover for binding a bundle of leaves by attaching an outer covering (41) on an element (45) for manufacturing such a binding cover whereby, in places where an attachment of the outer covering (41) to the element (45) is desired, the outside of the element (45) and/or the outer covering (41) is provided with a coat of hot-melt adhesive.

20. Use according to claim 19, **characterised in that** the substrate (42) is rigid.

21. Use according to claim 19 or 20 of a laminating device (1) according to any one of the claims 1 to 5, whereby the element (45) for manufacturing a binding cover is provided with a U-shaped back (46), whereby the outer covering (41) is attached to the back (46) by the outer covering (41) being affixed over the back (46) and then the back (46) with the outer covering (41) affixed thereon being placed in the slot (52).

## Patentansprüche

1. Laminiervorrichtung zum Anbringen einer Folie (41) auf einem Substrat (42), wobei die Folie (41) und/oder das Substrat (42) mit einer Schicht Schmelzkleber versehen sind, wobei die Laminiervorrichtung (1) versehen ist mit:
• einer Basis (3) und einer Platte (8), die in Bezug auf die Basis (2) vertikal bewegbar ist und die zusammen mit der Basis (2) einen Raum (9) bildet, in den das Substrat (42), zusammen mit der dagegen angebrachten, zu laminierenden Folie (41), eingebracht werden kann;
• Mitteln zum Anheben der Platte (8) nach oben und wieder Absenken in eine Ruheposition, worin die Platte (8) auf einem Substrat (42) mit einer zu laminierenden Folie (41), das sich in dem Raum zwischen der Platte (8) und der Basis (3) befindet, aufliegen kann;
• einem Heizelement (25) zum Erhitzen der Platte (8) und/oder der Basis (3) bis auf eine Temperatur, die über der Schmelztemperatur des Schmelzklebers liegt; und
• einem Eingang und einem Ausgang (34) für die Einfuhr und Ausfuhr des Substrats (42) zusammen mit der zu laminierenden Folie (41) in den und aus dem Raum (9) zwischen der Basis (3) und der Platte (8),
**dadurch gekennzeichnet, dass** sie mit einem U-förmigen Schlitz (52) versehen ist, gebildet durch ein Basiselement (8) und zwei Wandelemente (53), wobei das Basiselement (8) und/oder die Wandelemente (53) dazu eingerichtet sind, erhitzt zu werden.

2. Laminiervorrichtung nach Anspruch 1, **dadurch gekennzeichnet, dass** das Basiselement durch die Platte (8) gebildet ist, wobei die Laminiervorrichtung (1) mit einem Heizelement (25) zum Erhitzen der Platte (8) ausgerüstet ist.

3. Laminiervorrichtung nach Anspruch 2, **dadurch gekennzeichnet, dass** die Wandelemente (53) dadurch zum Erhitzen eingerichtet sind, dass sie aus einem Material hergestellt sind, das ein guter Wärmeleiter ist, wie etwa Aluminium, und dadurch, dass sie mit der Platte (8) in thermischen Kontakt stehen.

4. Laminiervorrichtung nach einem der Ansprüche 1 bis 3, **dadurch gekennzeichnet, dass** mindestens eines der Wandelemente (53) in einer Richtung weg von dem anderen Wandelement (53) und zurück bewegt werden kann, um dadurch die Breite des Schlitzes (52) zu verändern.

5. Laminiervorrichtung nach Anspruch 4, **dadurch gekennzeichnet, dass** sie mit einer Druckfeder (55) versehen ist, um ein bewegbares Wandelement (53) in die Richtung des anderen Wandelements (53) zu drücken.

6. Laminiervorrichtung nach einem der vorhergehenden Ansprüche, **dadurch gekennzeichnet, dass** die Platte (8) groß genug ist, um das Substrat (42) vollständig zu bedecken.

7. Laminiervorrichtung nach einem der vorhergehenden Ansprüche, **dadurch gekennzeichnet, dass** sie mit einer an dem Ausgang (34) montierten Andrückrolle (28) versehen ist, die in Bezug auf die Basis (3) vertikal bewegt werden kann, und Andrückmitteln (32), die die Andrückrolle (28) in die Richtung der Basis (3) drücken und die während des Austretens des Substrats (42) mit der zu laminierenden Folie (41) die Folie (41) und das Substrat (42) gegeneinander drücken.

8. Laminiervorrichtung nach Anspruch 7, **dadurch gekennzeichnet, dass** die Andrückrolle (28) sich unabhängig von der Platte (8) vertikal bewegen kann.

9. Laminiervorrichtung nach Anspruch 7 oder 8, **dadurch gekennzeichnet, dass** sie mit Mitteln versehen ist, die das Anpassen oder Einstellen der Höhe der Oberseite des Substrats (42) mit der zu laminierenden Folie (41) auf einem gewünschten Niveau der Unterseite der Andrückrolle (28) gestatten.

10. Laminiervorrichtung nach einem der vorhergehenden Ansprüche, **dadurch gekennzeichnet, dass** sie mit einem Schlitten (35) für das Ein- und Ausführen des Substrats (42) und der zu laminierenden Folie (41) versehen ist.

11. Laminiervorrichtung nach Anspruch 10, **dadurch gekennzeichnet, dass** der Schlitten (35) mit mindestens zwei aufrechten Rippen (38-39) in einem Abstand (C) voneinander versehen ist, die einen Raum (40) begrenzen, in den das Substrat (42) mit der Folie (41) eingebracht werden kann, wobei der vorgenannte Abstand (C) gleich der oder etwas größer ist als die Länge (D) der Platte (8), gemessen in der Einfuhrrichtung der Platte (8).

12. Laminiervorrichtung nach Anspruch 9 und Anspruch 11, **dadurch gekennzeichnet, dass** die Mittel, die das Anpassen und Einstellen der Höhe der Oberseite des Substrats (42) mit der zu laminierenden Folie (41) auf einem gewünschten Niveau in Bezug auf die Unterseite der Andrückrolle (28) gestatten, durch einen Satz Dickenplatten (43) gebildet sind, die zwischen die Rippen (38-39) des Schlittens (35) passen.

13. Laminiervorrichtung nach Anspruch 11 oder 12, **dadurch gekennzeichnet, dass** die Höhe von mindestens einer der Rippen (38-39) des Schlittens ein Maß für die Höheneinstellung der Oberseite des Substrats (42) mit der zu laminierenden Folie (41) ist.

14. Laminiervorrichtung nach Anspruch 13 und einem der Ansprüche 7 bis 9, **dadurch gekennzeichnet, dass** die Höhe der vorgenannten Rippe (38-39) derart ist, dass, wenn die betreffende Rippe (38-39) beim Verschieben des Schlittens (35) unter die Andrückrolle (28) kommt, diese Andrückrolle (28) aufwärts gedrückt wird.

15. Laminiervorrichtung nach einem der vorhergehenden Ansprüche, **dadurch gekennzeichnet, dass** sie mit einem Gehäuse (2) mit der besagten Basis (3) versehen ist.

16. Laminiervorrichtung nach einem der vorhergehenden Ansprüche, **dadurch gekennzeichnet, dass** die Platte (8) aus einem thermisch leitenden Material gefertigt ist und mit einem oder mehreren Heizelementen (25) versehen ist.

17. Laminiervorrichtung nach einem der vorhergehenden Ansprüche, **dadurch gekennzeichnet, dass** die Basis (3) nicht beheizt ist.

18. Laminiervorrichtung nach einem der vorhergehenden Ansprüche, **dadurch gekennzeichnet, dass** der Eingang und Ausgang (34) zusammen durch die Lücke zwischen der Basis (3) und der Andrückrolle (28) gebildet sind.

19. Anwendung einer Laminiervorrichtung (1) nach einem der vorhergehenden Ansprüche zur Herstellung eines Einbands zum Einbinden eines Blätterbündels durch Befestigen einer äußeren Abdeckung (41) an einem Element (45) zur Herstellung eines solchen Einbands, wobei, an Stellen, an denen eine Befestigung des Einbands (41) an dem Element (45) erwünscht ist, die Außenseite des Elements (45) und/oder die äußere Abdeckung (41) mit einer Schicht Schmelzkleber versehen ist.

20. Anwendung nach Anspruch 19, **dadurch gekennzeichnet, dass** das Substrat (42) steif ist.

21. Anwendung nach Anspruch 19 oder 20 einer Laminiervorrichtung (1) nach einem der Ansprüche 1 bis 5, wobei das Element (45) zur Herstellung eines Einbands mit einem U-förmigen Rücken (46) versehen ist, wobei die äußere Abdeckung (41) an dem Rücken (46) befestigt wird, indem die äußere Abdeckung (41) über dem Rücken (46) angebracht wird und dann der Rücken (46) mit der daran angebrachten äußeren Abdeckung (41) in dem Schlitz (52) platziert wird.

## Revendications

1. Dispositif de stratification pour fixer un film (41) sur un substrat (42), le film (41) et/ou le substrat (42) étant munis d'une couche d'un adhésif thermofusible, le dispositif de stratification (1) étant équipé :
- d'une base (3) et d'une plaque (8) qui est mobile en direction verticale par rapport à la base (2) et qui, de manière conjointe avec la base (2) forme un espace (9) dans lequel on peut introduire le substrat (42) conjointement avec le film (41) devant être stratifié qui y est fixé ;
- des moyens pour soulever la plaque (8) vers le haut et pour la rabaisser jusqu'à une position de repos dans laquelle la plaque (8) peut s'appuyer sur un substrat (42) avec un film (41) devant être stratifié qui se trouve dans l'espace ménagé entre la plaque (8) et la base (3) ;
- un élément de chauffage (25) pour chauffer la plaque (8) et/ou la base (3) jusqu'à une température qui est supérieure à la température de fusion de l'adhésif thermofusible ; et
- une entrée et une sortie (34) pour l'entrée et la sortie du substrat (42) conjointement avec le film (41) devant être stratifié, en direction et à partir de l'espace (9) ménagé entre la base (3) et la plaque (8) ;
**caractérisé en ce qu'**il est muni d'une fente (52) possédant une configuration en forme de U, formée par un élément (8) faisant office de base et par deux éléments (53) faisant office de parois, l'élément (8) faisant office de base et/ou les éléments (53) faisant office de parois étant disposés pour être chauffés.

2. Dispositif de stratification selon la revendication 1, **caractérisé en ce que** l'élément faisant office de base est formé par la plaque (8), le dispositif de stratification (1) étant équipé d'un élément de chauffage (25) pour chauffer la plaque (8).

3. Dispositif de stratification selon la revendication 2, **caractérisé en ce que** les éléments (53) faisant office de parois sont disposés pour être chauffés par le fait qu'ils sont constitués d'une matière qui représente un bon conducteur thermique, telle que l'aluminium, et par le fait qu'ils sont mis en contact thermique avec la plaque (8).

4. Dispositif de stratification selon l'une quelconque des revendications 1 à 3, **caractérisé en ce qu'**au moins un des éléments (53) faisant office de parois peut se déplacer dans une direction qui s'écarte de l'autre élément (53) faisant office de paroi et en retour pour ainsi modifier la largeur de la fente (52).

5. Dispositif de stratification selon la revendication 4, **caractérisé en ce qu'**il est muni d'un ressort de compression (55) dans le but de pousser un élément mobile (53) faisant office de paroi dans la direction de l'autre élément (53) faisant office de paroi.

6. Dispositif de stratification selon l'une quelconque des revendications précédentes, **caractérisé en ce que** la plaque (8) est suffisamment grande pour recouvrir complètement le substrat (42).

7. Dispositif de stratification selon l'une quelconque des revendications précédentes, **caractérisé en ce qu'**il est muni d'un rouleau de pression (28) monté à la sortie (34), qui peut se déplacer en direction verticale par rapport à la base (3), et de moyens de pression (32) qui poussent le rouleau de pression (28) dans la direction de la base (3) et qui, au cours de la sortie du substrat (42) avec le film (41) devant être stratifié, pressent le film (41) et le substrat (42) l'un contre l'autre.

8. Dispositif de stratification selon la revendication 7, **caractérisé en ce que** le rouleau de pression (28) peut se déplacer en direction verticale indépendamment de la plaque (8).

9. Dispositif de stratification selon la revendication 7 ou 8, **caractérisé en ce qu'**il est muni de moyens qui permettent de régler la hauteur de la surface supérieure du substrat (42) avec le film (41) devant être stratifié ou de régler à un niveau désiré le côté inférieur du rouleau de pression (28).

10. Dispositif de stratification selon l'une quelconque des revendications précédentes, **caractérisé en ce qu'**il est muni d'un coulisseau (35) pour l'entrée et la sortie du substrat (42) et du film (41) devant être stratifié.

11. Dispositif de stratification selon la revendication 10, **caractérisé en ce que** le coulisseau (35) est muni d'au moins deux nervures dressées (38 - 39) à une distance (C) l'une de l'autre qui définissent un espace (40) dans lequel le substrat (42) avec le film (41) peut être introduit, la distance susmentionnée (C) étant égale ou légèrement supérieure à la longueur (D) de la plaque (8), mesurée dans la direction d'entrée de la plaque (8).

12. Dispositif de stratification selon les revendications 9 et 11, **caractérisé en ce que** les moyens qui permettent de régler la hauteur de la surface supérieure du substrat (42) avec le film (41) devant être stratifié et de régler à un niveau désiré le côté inférieur du rouleau de pression (28) sont réalisés via un jeu de plaques d'épaisseur (43) qui viennent s'insérer entre les nervures (38 - 39) du coulisseau (35).

13. Dispositif de stratification selon la revendication 11 ou 12, **caractérisé en ce que** la hauteur d'au moins une des nervures (38 - 39) du coulisseau représente un calibre pour le réglage de la hauteur de la surface supérieure du substrat (42) avec le film (41) devant être stratifié.

14. Dispositif de stratification selon la revendication 13 et selon l'une quelconque des revendications 7 à 9, **caractérisé en ce que** la hauteur de la nervure susmentionnée (38 - 39) est telle que, lorsque la nervure (38 - 39) concernée vient se disposer en dessous du rouleau de pression (28) lors du coulissement du coulisseau (35), ce rouleau de pression (28) est poussé vers le haut.

15. Dispositif de stratification selon l'une quelconque des revendications précédentes, **caractérisé en ce qu'**il est muni d'un boîtier (2) comprenant ladite base (3).

16. Dispositif de stratification selon l'une quelconque des revendications précédentes, **caractérisé en ce que** la plaque (8) est fabriquée à partir d'une matière thermoconductrice et est munie d'un ou de plusieurs éléments de chauffage (25).

17. Dispositif de stratification selon l'une quelconque des revendications précédentes, **caractérisé en ce que** la base (3) n'est pas chauffée.

18. Dispositif de stratification selon l'une quelconque des revendications précédentes, **caractérisé en ce que** l'entrée et la sortie (34) sont toutes deux réalisées par l'espace ménagé entre la base (3) et le rouleau de pression (28).

19. Utilisation d'un dispositif de stratification (1) selon l'une quelconque des revendications précédentes, pour fabriquer une couverture de reliure pour relier un faisceau de feuilles en fixant une couverture externe (41) sur un élément (45) dans le but de fabriquer une telle couverture de reliure, utilisation par laquelle, aux endroits où l'on souhaite obtenir une fixation de la couverture externe (41) à l'élément (45), le côté externe de l'élément (45) et/ou la couverture externe (41) est/sont muni(s) d'une couche d'un adhésif thermofusible.

20. Utilisation selon la revendication 19, **caractérisée en ce que** le substrat (42) est rigide.

21. Utilisation selon la revendication 19 ou 20 d'un dispositif de stratification (1) selon l'une quelconque des revendications 1 à 5, par laquelle l'élément (45), pour fabriquer une couverture de reliure, est muni d'un dos (46) possédant une configuration en forme de U, la couverture externe (41) étant fixée au dos (46) par le fait de fixer la couverture externe (41) sur le dos (46) et par le fait de placer ensuite, dans la fente (52), le dos (46) sur lequel est fixée la couverture externe (41).
